# EUROPEAN PATENT APPLICATION

(11) **EP 0 546 786 A1**
(43) Date of publication of application: **16.06.1993**
(21) Application number: 92311144.7
(22) Date of filing: 07.12.1992
(51) Int. Cl.: G01K 13/02

(54) **Thermocouples**

(30) Priority: 10.12.1991 GB 9126218
(71) Applicant: SCHLUMBERGER INDUSTRIES LIMITED, Farnborough Hampshire, GU14 7PW (GB)
(72) Inventor: Smith, George Watson, Lindford, East Hampshire GU35 OTA (GB)
(74) Representative: Stoole, Brian David

(57) **Abstract**

A thermocouple for use in a gas turbine engine comprises an elongate cylindrical thermocouple element, specifically a mineral-insulated thermocouple element, disposed coaxially inside an elongate cylindrical protective sheath. The sheath defines an annular gap around the thermocouple element, and the element is supported within the sheath by at least one tubular support disposed in the annular gap. The support is a tight sliding fit within the sheath, and its internal diameter is greater than the external diameter of the thermocouple element. To support the element, the support has two spaced apart regions which are swaged to reduce their internal diameter to be a tight sliding fit around the element. The sheath, support and element are brazed together at the ends of them remote from the sensing tip of the thermocouple element.

## Description

This invention relates to thermocouples, and is more particularly but not exclusively concerned with thermocouples suitable for use in gas turbine engines.

Thermocouples for use in gas turbine engines typically have to withstand high temperatures and high levels of vibration. At the same time, there is frequently a requirement for a long reach thermocouple, ie one which projects a long way into the gas glow duct whose temperature is to be sensed, as well as a requirement for a fast response. Thus when designing an appropriate support for the thermocouple element, all these factors have to be taken into account.

In gas turbine engine thermocouples, it is conventional to mount the thermocouple element within an outer protective sheath, to provide both strength and support. It is of course then necessary to provide some support between the thermocouple element and the protective sheath. With such an arrangement, the problems of vibration damping and of differential thermal expansion between the protective sheath and the thermocouple element, as well as the problem of ensuring coaxial alignment of the element within the sheath, all need to be solved, without compromising the desired fast response.

One well known form of thermocouple which solves these problems rather well is described in United Kingdom Patent No. 1 452 681, and has been manufactured in quantity by the present Applicant for a number of years. However, it is an object of the present invention to provide a thermocouple which solves the aforementioned problems at least as well as the known thermocouple, but which is simpler and less expensive to manufacture.

According to the present invention, there is provided a thermocouple comprising an elongate cylindrical thermocouple element having a sensing tip, the element being disposed coaxially within an elongate cylindrical protective sheath which defines an annular gap around the element, wherein the element is supported within the sheath by a tubular support member which is a tight sliding fit within the sheath and whose internal diameter is greater than the external diameter of the element, the support member having at least two axially spaced reduced-diameter portions which are a tight sliding fit around the element, and the element, the support member and the sheath being secured together at the respective ends thereof remote from the sensing tip of the element.

Thus because the thermocouple element, the support tube and the protective sheath are secured together only at the end of the thermocouple remote from the sensing tip of the element, differential thermal expansion of these three components lengthwise of the thermocouple is accommodated by relative sliding of the components. Additionally, the support tube is relatively easy to make, and its use not only ensures coaxial alignment between the thermocouple element and the protective sheath, but also reduces the number of components in the thermocouple and simplifies assembly.

In a preferred embodiment of the invention, one of said reduced-diameter portions of the support member is at the end thereof closer to the sensing tip of the element, and is adjacent the sensing tip. In this case, said one reduced-diameter portion is preferably connected to the remainder of the support member by a short tapering portion, whose diameter increases progressively up to the full diameter of the support member and which provides a degree of flexibility in the support of the sensing tip, and there are preferably at least two further reduced-diameter portions along the length of the support member.

Conveniently, the respective ends of the element, the support member and the sheath remote from the sensing tip are secured together, and advantageously also to a main body member disposed at said ends, by brazing or welding. .

The thermocouple element is preferably a mineral-insulated thermocouple element, and the support member and the sheath are preferably made from a high temperature alloy selected from nimomic and hastelloy.

Typically, the sheath is provided with one or more apertures at the end thereof adjacent the sensing tip, to permit gas whose temperature is to be sensed to flow over the sensing tip.

The reduced-diameter portions of the support member are preferably produced by swaging the support member onto a mandrel of the same diameter as the thermocouple element.

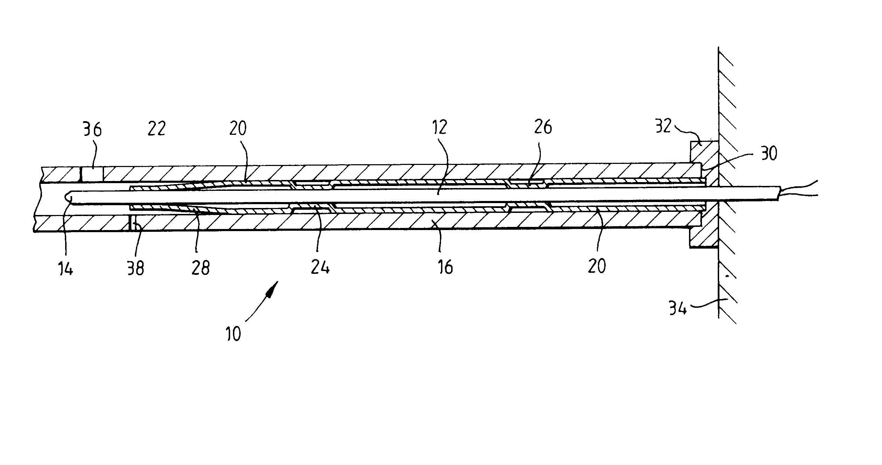

The invention will now be described, by way of example only, with reference to the accompanying drawing, which is a sectional view of a gas turbine engine thermocouple in accordance with the present invention.

The thermocouple shown in the drawing is indicated generally at 10, and comprises a thin elongate mineral-insulated thermocouple element 12 having a sensing tip 14. As is well known, the element 12 comprises a cylindrical outer sheath, typically of Inconel 600, containing at least one pair of thermocouple wires, typically K type, N type or R type, which are joined together to form a thermocouple junction at the sensing tip 14, but which are otherwise insulated from each other and from the outer sheath by magnesium oxide powder. The outer diameter of the element 12 is typically 4.5mm, although smaller diameters are possible and/or the sensing tip 14 can be swaged down to about 2.0mm if desired to enhance speed of response.

The thermocouple element 12 is disposed coaxially within a cylindrical protective sheath 16, typically made of Nimonic 80, Hastelloy X or other suitable high temperature resistant alloy, which defines an annular space around the element. The element 12 is supported within the sheath 16, and held in coaxial alignment with it, by means of a thin-walled support tube 20, which is a tight sliding fit within the sheath 16 and made of the same high temperature resistant material. The internal diameter of the support tube 20 is greater than the diameter of the thermocouple element 12, but the tube has three spaced apart reduced-diameter portions 22, 24, 26 within which the element is a tight sliding fit. The portions 22, 24, 26 are produced by swaging the tube 20 onto a mandrel of precisely the same diameter as the element 12.

As can be seen in the drawing, the reduced-diameter portion 22 is at the end of the tube 20 closer to the sensing tip 14 of the element 12, and is in fact closely adjacent the sensing tip (although if the sensing tip is swaged down to a reduced diameter as mentioned earlier, the portion 22 preferably does not embrace the swaged-down part of the tip). The reduced-diameter portion 22 is connected to the remainder of the tube 20 by a short tapering portion 28, also produced by swaging, whose diameter increases gradually or progressively up to the full diameter of the tube (as opposed to the abrupt, almost step-like, changes between the reduced-diameter portions 24, 26 and the remainder of the tube). This provides a degree of flexibility in the support for the sensing tip 14 of the element 12.

The end of the tube 20 further from the sensing tip 14 of the element 12 is brazed to the outer sheath of the element and to the corresponding end of the protective sheath 16, and both these ends are also brazed in a circular recess 30 in a main body member 32. The body member 32 is secured in turn in a casing 34 surrounding the gas turbine engine duct in which the temperature is to be sensed by the thermocouple 10. The element 12 passes through the body member 32 and the casing 34 to a suitable terminal block (not shown) disposed outside the casing.

The end of the protect ive sheath 16 adjacent the sensing tip 14 of the element 12 is provided with offset apertures 36, 38 which permit the gas flowing in the aforementioned duct to flow over the sensing tip. The extreme end of the sheath, to be left of the sensing tip 14 as viewed in the drawing, is typically closed by a welded-on end cap (not shown).

The thermocouple 10 has only two principal components in addition to the thermocouple element 12 and the main body member 32, viz. the protective sheath 16 and the support tube 20. These components are relatively easy and inexpensive to make and assemble, thus reducing the manufacturing cost of the thermocouple 10. Additionally, because the element 12, the sheath 16 and the tube 20 are secured together only at the body member 32, differential thermal expansion of these three components in a longitudinal sense is accommodated by the relative sliding permitted between them. Thus if desired, different materials having slightly different thermal expansion coefficients could be used for these three components, each material being selected to have optimum properties for its precise role.

It will be appreciated that various modifications can be made to the described embodiment of the invention. In particular, the various dimensions and materials mentioned in relation to the described embodiment are exemplary only. In the limit, the invention also includes the possibility that the support tube 20 can simply be omitted altogether, and the protective sheath 16 itself can be swaged instead, eg at positions corresponding to the reduced-diameter portions 22, 24, 26 of the tube 20, to form reduced-diameter portions which serve the same supporting function as the portions 22, 24, 26 (albeit without the limited flexibility of support provided for the sensing tip 14 by the tapering portion 28 of the tube 20).

## Claims

1. A thermocouple comprising an elongate cylindrical thermocouple element having a sensing tip, the element being disposed coaxially within an elongate cylindrical protective sheath which defines an annular gap around the element, wherein the element is supported within the sheath by a tubular support member which is a tight sliding fit within the sheath and whose internal diameter is greater than the external diameter of the element, the support member having at least two axially spaced reduced-diameter portions which are a tight sliding fit around the element, and the element, the support member and the sheath being secured together at the respective ends thereof remote from the sensing tip of the element.

2. A thermocouple as claimed in claim 1, wherein one of said reduced-diameter portions of the support member is at the end thereof closer to the sensing tip of the element, and is adjacent the sensing tip.

3. A thermocouple as claimed in claim 2, wherein said one reduced-diameter portion is connected to the remainder of the support member by a short tapering portion, whose diameter increases progressively up to the full diameter of the support member and which provides a degree of flexibility in the support of the sensing tip.

4. A thermocouple as claimed in claim 2 or claim 3, wherein there are at least two further reduced-diameter portions along the length of the support member.

5. A thermocouple as claimed in any preceding claim, wherein the respective ends of the element, the support member and the sheath remote from the sensing tip are secured together by brazing or welding.

6. A thermocouple as claimed in any preceding claim, further comprising a main body member, the respective ends of the element, the support member and the sheath remote from the sensing tip being secured to each other and to the body member by brazing or welding.

7. A thermocouple as claimed in any preceding claim, wherein the thermocouple element is a mineral-insulated thermocouple element.

8. A thermocouple as claimed in any preceding claim, wherein the support member is made from a high temperature alloy selected from nimonic and hastelloy.

9. A thermocouple as claimed in any preceding claim, wherein the sheath is made from a high temperature alloy selected from nimonic and hastelloy.

10. A thermocouple as claimed in any preceding claim, wherein the sheath is provided with one or more apertures at the end thereof adjacent the sensing tip, to permit gas whose temperature is to be sensed to flow over the sensing tip.

11. A thermocouple as claimed in any preceding claim, wherein the reduced-diameter portions of the support member are produced by swaging the support member onto a mandrel of the same diameter as the thermocouple element.
